(19) Europäisches Patentamt
European Patent Office
Office européen des brevets

(11) **EP 3 164 951 B1**

(12) **FASCICULE DE BREVET EUROPEEN**

(45) Date de publication et mention de la délivrance du brevet:
**17.03.2021 Bulletin 2021/11**

(51) Int Cl.:
***H04B 10/2581*** *(2013.01)*    ***H04J 14/04*** *(2006.01)*

(21) Numéro de dépôt: **15732640.6**

(22) Date de dépôt: **26.06.2015**

(86) Numéro de dépôt international:
**PCT/EP2015/064499**

(87) Numéro de publication internationale:
**WO 2016/001078 (07.01.2016 Gazette 2016/01)**

(54) **MÉTHODE ET SYSTÈME DE TRANSMISSION SUR FIBRE OPTIQUE À BRASSAGE DE MODES ET/OU DE COEURS**

VERFAHREN UND SYSTEM ZUR GLASFASERÜBERTRAGUNG MIT UMSCHALTUNG VON MODI UND/ODER KERNEN

METHOD AND SYSTEM OF OPTICAL FIBRE TRANSMISSION WITH SWITCHING OF MODES AND/OR CORES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.07.2014 FR 1456284**

(43) Date de publication de la demande:
**10.05.2017 Bulletin 2017/19**

(73) Titulaire: **Institut Mines-Telecom 75014 Paris (FR)**

(72) Inventeurs:
- **AWWAD, Elie**
  **F-75013 Paris (FR)**
- **REKAYA-BEN OTHMAN, Ghaya**
  **F-92160 Antony (FR)**
- **JAOUEN, Yves**
  **F-75019 Paris (FR)**

(74) Mandataire: **Marks & Clerk France Immeuble "Visium" 22, avenue Aristide Briand 94117 Arcueil Cedex (FR)**

(56) Documents cités:
**EP-A1- 2 541 809    FR-A1- 2 977 099**

- **CHEN M-Y. ET AL: "Design of add-drop multiplexer based on multi-core optical fibres for mode-division multiplexing", OPTICS EXPRESS, no. 1440, 27 janvier 2014 (2014-01-27), XP002738667,**
- **ALIREZA TARIGHAT ET AL: "Fundamentals and Challenges of Optical Multiple-Input Multiple-Output Multimode Fiber Links", IEEE COMMUNICATIONS MAGAZINE, IEEE SERVICE CENTER, PISCATAWAY, US, 1 mai 2007 (2007-05-01), pages 57-63, XP002598346, ISSN: 0163-6804**

**Description**

**DOMAINE TECHNIQUE**

La présente invention concerne de manière générale le domaine des télécommunications optiques et plus particulièrement celles utilisant des fibres optiques de type multi-mode ou multi-cœur.

**ÉTAT DE LA TECHNIQUE ANTÉRIEURE**

Les transmissions optiques sur longue distance (quelques centaines à quelques milliers de kms) utilisent des fibres optiques monomode. Celles-ci offrent l'avantage de ne pas présenter de dispersion modale (hormis la dispersion modale de polarisation) et de pouvoir supporter des débits élevés plusieurs dizaines de Gbits/s par longueur d'onde, et ce pour une pluralité de longueurs d'onde.

Toutefois, pour des transmissions sur courtes distances, notamment pour des réseaux locaux large bande (LANs), les fibres multimode ou multi-cœur constituent une alternative particulièrement intéressante aux fibres monomodes. On peut distinguer deux types de fibres multi-mode : les fibres plastiques (ou POF) et les fibres en silice. Les premières sont généralement utilisées avec une simple détection d'énergie en bout de ligne sans multiplexage des données sur les différents modes. Les secondes en revanche n'autorisent généralement la propagation que d'un moindre nombre de modes mais sont utilisées avec un multiplexage et une détection des données sur les différents modes, ce qui les rend intéressantes pour assurer de grandes capacités de transmission tant sur de faibles que de longues distances.

Les fibres multi-mode en silice possèdent un cœur de grand diamètre autorisant la propagation de plusieurs modes guidés, notés $L_{\ell p}$ pour une polarisation rectiligne où $\ell$ est l'indice de mode azimutal et $p$ l'indice de mode radial. Le mode $LP_{01}$ est le mode fondamental, le seul à pouvoir se propager dans une fibre monomode. Le nombre total de modes $L_{\ell p}$ dépend des paramètres optogéométriques (diamètre du cœur, profil d'indice notamment). L'information à transmettre est répartie sur les différents modes guidés. Lorsque le nombre de modes guidés est faible, on parle de fibre optique faiblement multi-mode. Plus précisément, une fibre optique est dite faiblement multi-mode si son paramètre de fréquence normalisée $V$ est tel que $V < 8$.

La bande-passante des fibres multimode est généralement supérieure à celle des fibres monomode, chaque mode étant séparément modulé et le signal à transmettre étant multiplexé sur les différents modes. Cette bande passante est toutefois limitée par le couplage entre modes $L_{\ell p}$ lors de la propagation (diaphotie inter-mode).

En outre, pour de longues distances, des amplificateurs doivent être prévus entre tronçons de fibre optique. Du fait de la dispersion modale du gain de ces amplificateurs (ainsi que celle due à d'autres composants optiques tels que multiplexeurs ou démultiplexeurs par exemple) et, dans une moindre mesure du fait des imperfections de la fibre (épissures entre tronçons notamment), les différents modes ne subissent pas la même atténuation. Le différentiel de perte entre modes $L_{\ell p}$, encore dénommé MDL (*Mode Dependent Loss*), induit une sensibilité accrue aux sources de bruit, qui peut limiter significativement la portée de ces systèmes.

Les fibres multi-cœur comprennent une pluralité de cœurs (généralement de 2 à 7 cœurs) au sein d'une gaine commune. La dimension des cœurs est suffisamment faible pour ne permettre qu'une propagation monomode dans chacun d'entre eux. A la différence des fibres multimode, celles-ci ne présentent donc pas de dispersion modale. En revanche, les ondes évanescentes créent un couplage entre les différents cœurs (diaphotie inter-cœur), le niveau de diaphotie est d'autant plus élevé que le nombre de cœurs est élevé et la distance inter-cœur est faible. Comme le couplage inter-mode évoqué précédemment, le couplage inter-cœur limite la portée de ces systèmes.

Il a été proposé dans la demande FR-A-2977099 au nom du présent déposant, d'utiliser un codage spatio-temporel pour transmettre des symboles sur une pluralité de modes (dans une fibre faiblement multi-mode) ou de cœurs. Cette technique permet de réduire sensiblement le taux d'erreur binaire en cas de diaphotie inter-mode ou inter-cœur. Cependant, pour un même rapport signal sur bruit, le taux d'erreur binaire reste encore supérieur à celui qui serait observé pour un canal additif gaussien.

Le but de la présente invention est par conséquent de réduire davantage le taux d'erreur binaire dans le cas d'une transmission sur fibre optique multi-mode ou multi-cœur.

**EXPOSÉ DE L'INVENTION**

La présente invention est définie par un système de transmission optique sur fibre multi-mode comprenant :

- un codeur, dit codeur spatio-temporel, transformant chaque bloc de symboles à transmettre en une matrice de code, chaque élément de ladite matrice étant relatif à un temps d'utilisation et à un mode de propagation de ladite fibre;
- une pluralité de modulateurs respectivement associés à des modes de propagation distincts de ladite fibre, chaque modulateur modulant un faisceau laser pendant un temps d'utilisation au moyen d'un élément correspondant de la matrice, chaque faisceau laser ainsi modulé étant injecté dans ladite fibre pour s'y propager selon un mode distinct;

dans lequel :

- ladite fibre comprend une pluralité de tronçons, un amplificateur étant prévu entre deux tronçons consécutifs quelconques pour amplifier l'intensité des faisceaux se propageant selon lesdits modes ;
- un brasseur de modes est associé au dit amplificateur pour effectuer une permutation desdits modes entre au moins deux tronçons consécutifs.

L'invention concerne également un système de transmission optique sur fibre multi-cœur comprenant :

- un codeur, dit codeur spatio-temporel, transformant chaque bloc de symboles à transmettre en une matrice de code, chaque élément de ladite matrice étant relatif à un temps d'utilisation et à un cœur de ladite fibre ;
- une pluralité de modulateurs respectivement associés à des cœurs de ladite fibre, chaque modulateur modulant un faisceau laser pendant un temps d'utilisation au moyen d'un élément correspondant de la matrice, chaque faisceau laser ainsi modulé étant injecté dans un cœur distinct de ladite fibre;

dans lequel :

- ladite fibre comprend une pluralité de tronçons, un amplificateur étant prévu entre deux tronçons consécutifs quelconques pour amplifier l'intensité des faisceaux se propageant dans ladite pluralité de cœurs;
- un brasseur de cœurs est associé au dit amplificateur pour effectuer une permutation des faisceaux des différents cœurs entre au moins deux tronçons consécutifs.

Le codeur spatio-temporel peut utiliser un code TAST ou un code parfait.

Le modulateur est avantageusement un modulateur QAM, suivi d'un modulateur OFDM.

Selon une première variante, les amplificateurs sont des amplificateurs optiques.

Selon une seconde variante, les amplificateurs comprennent chacun une pluralité de photodiodes pour convertir les signaux optiques des différents modes en signaux électriques, des amplificateurs élémentaires amplifiant les différents signaux électriques, et une pluralité de diodes laser respectivement modulées par les signaux électriques ainsi amplifiés.

Quel que soit le mode de réalisation, on prévoit $P$ brasseurs de modes/de cœurs tous les $Q$ amplificateurs, le rapport $P/Q$ étant choisi de sorte que la dispersion modale de gain de la fibre soit sensiblement égale à la valeur $\Delta G.\sqrt{L}$ où $L$ est le nombre de tronçons de la fibre optique.

L'invention concerne également une méthode de transmission optique sur fibre multi-mode comprenant :

- un codage, dit codage spatio-temporel, transformant chaque bloc de symboles à transmettre en une matrice de code, chaque élément de ladite matrice étant relatif à un temps d'utilisation et à un mode de propagation de ladite fibre;
- une modulation d'une pluralité de faisceaux laser associés aux différents modes, chaque faisceau laser étant modulé pendant un temps d'utilisation au moyen d'un élément de la matrice correspondant, chaque faisceau laser ainsi modulé étant injecté dans ladite fibre pour s'y propager selon un mode distinct;

dans laquelle :

- l'intensité des faisceaux se propageant selon lesdits modes est amplifiée entre deux tronçons consécutifs quelconques de ladite fibre ;
- les modes sont brassés entre au moins deux tronçons consécutifs.

L'invention concerne enfin une méthode de transmission optique sur fibre multi-cœur comprenant :

- un codage, dit codage spatio-temporel, transformant chaque bloc de symboles à transmettre en une matrice de code, chaque élément de ladite matrice étant relatif à un temps d'utilisation et à un cœur de ladite fibre;
- une modulation d'une pluralité de faisceaux laser associés aux différents cœurs, chaque faisceau laser étant modulé pendant un temps d'utilisation au moyen d'un élément de la matrice correspondant, chaque faisceau laser ainsi modulé étant injecté dans un cœur distinct de ladite fibre;

dans laquelle :

- l'intensité des faisceaux se propageant selon lesdits cœurs est amplifiée entre deux tronçons consécutifs quelconques de ladite fibre ;
- les faisceaux des différents cœurs sont brassés entre au moins deux tronçons consécutifs.

Le codage spatio-temporel peut utiliser un code TAST ou un code parfait.

Avantageusement, la modulation comprend une première étape de modulation QAM suivie d'une seconde étape de modulation OFDM.

Selon une première variante, l'amplification entre deux tronçons consécutifs est réalisée au moyen d'un pompage optique.

Selon une seconde variante, l'amplification entre deux tronçons consécutifs est réalisée au moyen d'une conversion optique-électrique, une amplification des signaux électriques ainsi obtenus et une conversion électrique-optique des signaux électriques ainsi amplifiés.

Quel que soit le mode de réalisation, on prévoit $P$ étapes de brassage de modes/ de cœurs tous les $Q$ étapes d'amplification, le rapport $P/Q$ étant choisi de sorte que la dispersion modale de gain de la fibre soit sensiblement égale à la valeur $\Delta G.\sqrt{L}$ où $L$ est le nombre de tronçons de la fibre optique.

## BRÈVE DESCRIPTION DES DESSINS

D'autres caractéristiques et avantages de l'invention apparaîtront à la lecture de modes de réalisation préférentiels de l'invention, en référence aux figures jointes parmi lesquelles :

La Fig. 1 représente schématiquement un système de transmission sur fibre optique selon un premier mode de réalisation de l'invention ;

Les Figs. 2A à 2C représentent schématiquement la variation du taux d'erreur binaire en fonction du rapport signal sur bruit dans le cas du système de transmission de la Fig. 1, pour différents niveaux de couplage entre modes et différentes méthodes de détection ;

La Fig. 3 donne le nombre optimal de brasseurs de modes par tronçon pour différents taux de couplage entre modes ;

La Fig. 4 représente schématiquement un système de transmission sur fibre optique selon un second mode de réalisation de l'invention.

## EXPOSÉ DÉTAILLÉ DE MODES DE RÉALISATION PARTICULIERS

Nous exposerons tout d'abord l'invention dans le cas d'une transmission sur fibre optique multi-mode, et plus particulièrement dans le cas d'une fibre optique faiblement multi-mode. Comme indiqué dans la partie introductive une fibre multi-mode est affectée par une dispersion modale de gain ou MDL (*Mode Dependent Loss*) dont les effets en termes de taux d'erreur binaire peuvent être combattus au moyen d'un codage spatio-temporel, la variable spatiale utilisée étant ici un mode de propagation dans la fibre.

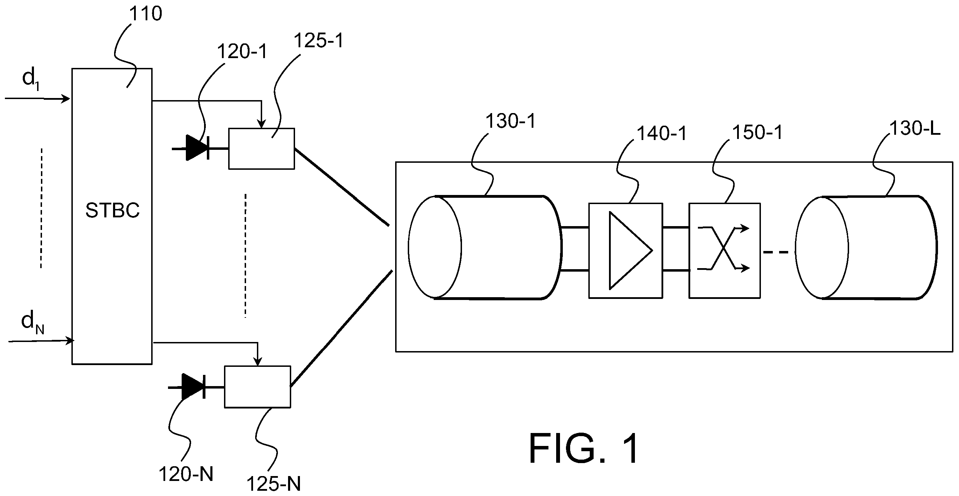

L'idée à la base du premier mode de réalisation de l'invention est d'associer au codage spatio-temporel un brassage de modes. Plus précisément, un système de transmission optique selon ce premier mode de réalisation est représenté en Fig. 1.

Ce système de transmission comprend un codeur spatio-temporel 110. Le flux de symboles à transmettre est divisé en bloc de taille $B$, chaque bloc étant transmis pendant un intervalle de transmission ou TTI (*Time Transmission Interval*). Le codeur associe à chaque bloc de symboles une matrice **C** de taille $N \times T$, dénommée ci-après matrice spatio-temporelle :

$$\mathbf{C} = \begin{pmatrix} c_{1,1} & c_{1,2} & \cdots & c_{1,T} \\ c_{2,1} & c_{2,2} & \cdots & c_{2,T} \\ \vdots & \vdots & \ddots & \vdots \\ c_{N,1} & c_{N,2} & \cdots & c_{N,T} \end{pmatrix} \qquad (1)$$

où les éléments de la matrice, $c_{n,t}$, $n$ = 1, ..., $N$, $t$ = 1,..,$T$ (avec $N \geq 2$ et $T \geq 2$) sont en règle générale des coefficients complexes dépendant des symboles à transmettre, $N$ est le nombre de modes utilisés, $T$ est un entier indiquant l'extension temporelle du code, c'est-à-dire le nombre d'utilisations du canal, en l'occurrence de la fibre.

Le code spatio-temporel sera avantageusement un code TAST (*Threaded Algebraic Space-Time code*) tel que décrit dans l'article de H. El Gamal et al. intitulé « Universal Space-Time Coding » publié dans IEEE Trans. on Information Theory, Vol. 49, n° 5, mai 2003. Alternativement, un code parfait pourra être utilisé comme code spatio-temporel. On trouvera une description des codes parfaits dans l'article de F. Oggier et al. intitulé « Perfect space-time codes » publié dans Trans. on Information Theory, vol. 52, No. 9, Septembre 2006.

Le système de transmission optique comprend $N$ lasers $120_n$, $n =1,...,N,$ de même longueur d'onde ou bien alternativement un seul laser dont le faisceau est divisé en $N$ faisceaux distincts. Dans tous les cas, les faisceaux sont respectivement modulés par les différentes sorties du codeur spatio-temporel. Plus précisément, au temps $t,$ l'élément $c_{n,t}$ module le signal optique du laser 120-n au moyen du modulateur 125-n, par exemple un modulateur Mach-Zehnder, connu en soi. La modulation en question est une modulation en amplitude (QAM). Les types de modulation utilisés pour les différents faisceaux ne sont pas nécessairement identiques.

Le cas échéant les modulateurs 125-n comprendront chacun un premier modulateur QAM suivi d'un second modulateur OFDM (non représenté sur la figure). L'utilisation d'une modulation OFDM pour les différents modes permet de s'affranchir de la dispersion modale de temps de propagation en choisissant la taille du préfixe cyclique supérieure à l'étalement temporel maximal de propagation.

En tout état de cause, les faisceaux optiques ainsi modulés excitent chacun un mode de la fibre multi-mode 130. Cette excitation sélective peut être réalisée soit au moyen d'un dispositif optique en espace libre, soit au moyen d'un multiplexeur en optique guidée.

Les $N$ modes utilisés peuvent représenter l'ensemble des modes de la fibre optique. Ce peut être notamment le cas lorsque la fibre optique est faiblement multi-mode.

La fibre multi-mode 130 comprend une pluralité $L$ de tronçons, 130$\ell$, $\ell$ = 1,...,$L$, un amplificateur 140$\ell$ étant prévu entre chaque paire de tronçons consécutifs 130$\ell$ et 130$\ell$+1. L'amplificateur est avantageusement un amplificateur optique de type FMA (*Few Mode Amplifier*), adapté à amplifier simultanément l'intensité d'une pluralité de modes de la fibre. L'amplificateur optique peut amplifier les différents modes par pompage optique par exemple. Un exemple d'amplificateur FMA utilisant un pompage optique dans une fibre optique dopée à l'Erbium ou FM-EDFA (*Few Mode Erbium Doped Fiber Amplifier*) est décrit dans l'article de G. Le Coq et al. intitulé « Few-mode Er3+ doped fiber with microstructured core for mode division multiplexing in the C-band » publié dans Optics Express, vol. 21, No. 25 pp. 31646-31659, Décembre 2013.

Selon une seconde variante, l'amplificateur 140$\ell$ peut comprendre une pluralité de photodiodes pour convertir les signaux optiques des différents modes (séparés au moyen d'un réseau de diffraction par exemple) en signaux électriques, des amplificateurs élémentaires amplifiant les différents signaux électriques, et une pluralité de diodes laser respectivement modulées par les signaux électriques ainsi amplifiés. Après amplification, les signaux électriques peuvent faire l'objet d'une conversion analogique-numérique, d'un filtrage numérique puis d'une conversion numérique-analogique. On obtient ainsi une pluralité de flux d'échantillons numériques respectivement associés aux différents modes.

Quelle que soit la variante envisagée, à l'amplificateur peut être associé un brasseur de modes. Dans le cas illustré, un brasseur de modes, 150$\ell$, est associé à chaque amplificateur 140$\ell$. Ce brasseur de modes effectue une permutation de la pluralité des modes 1,..., $N$. On entend par permutation toute bijection de l'ensemble des modes sur lui-même, distincte de l'identité. Cette permutation peut être par exemple une permutation circulaire sur l'ensemble des modes 1,.... $N$. Avantageusement, pour chaque tronçon la permutation est une permutation aléatoire parmi les $N$!-1 permutations possibles. Le brasseur de modes peut être réalisé en appliquant des contraintes mécaniques à la fibre. Un exemple de réalisation d'un brasseur de modes peut être trouvé dans l'article de An Li et al. intitulé «Transmission of 107-Gb/s mode and polarization multiplexed CO-OFDM signal over a two-mode fiber », publié dans Optics Express, 25 avril 2011, vol. 19, N° 9, pp. 8808-8814. D'autres types de brasseurs de modes sont disponibles sur le marché, par exemple les brasseurs de modes SDM (*Space Division Multiplexing*) de la société Phoenix Photonics.

Il est important de noter que lorsque l'amplificateur est implémenté selon la seconde variante mentionnée ci-dessus, le brassage de modes peut être réalisé simplement en brassant les flux d'échantillons numériques relatifs aux différents modes. Ainsi, le brasseur de modes peut être réalisé soit de manière optique, soit de manière numérique (et plus généralement électrique en brassant les signaux électriques relatifs aux différents modes).

En sortie de la fibre optique, du côté du récepteur (non représenté), les différents modes sont spatialement démultiplexés, convertis en signaux électriques par des photodétecteurs et numérisés.

Les signaux numérisés peuvent s'exprimer sous la forme matricielle suivante:

$$\mathbf{Y} = \mathbf{HC} + \mathbf{N} = \prod_{\ell=1}^{L}\left(\mathbf{P}_{\ell}\mathbf{G}_{\ell}\prod_{k=1}^{K}\left(\mathbf{T}_{\ell,k}\mathbf{R}_{\ell,k}\right)\mathbf{C}\right) + \mathbf{N} \qquad (2)$$

où $\mathbf{Y}$ est une matrice de taille $N \times T$ représentant les $T$ signaux reçus sur les $N$ modes pendant les $T$ instants de transmission d'un intervalle TTI, **H** est une matrice de taille $N{\times}N$ représentative du canal de transmission, **C** est la matrice de taille $N{\times}T$ du code spatio-temporel, et **N** est une matrice de taille $N{\times}T$ dont les éléments sont des échantillons de bruit (supposé blanc additif gaussien) affectant les signaux reçus sur les $N$ modes pour les $T$ instants de transmission, $\mathbf{P}_\ell$ et $\mathbf{G}_\ell$ sont respectivement la matrice de permutation du brasseur de modes 150$\ell$ et la matrice de gain de l'amplificateur 140$\ell$ pour les différents modes. Autrement dit, $\mathbf{G}_\ell$ est une matrice diagonale de taille $N{\times}N$ dont les éléments donnent les gains respectifs de l'amplificateur pour les différents modes. La matrice $\mathbf{G}_\ell$ peut être représentée par le produit d'un gain moyen (scalaire) avec une matrice d'offset autour de ce gain.

Chaque tronçon de fibre peut être conceptuellement divisé en $K$ sections consécutives, les caractéristiques de la fibre étant stationnaires sur la longueur de chaque section et modélisées par un produit matriciel $\mathbf{T}_{,\ell k}\mathbf{R}_{\ell,k}$ où $\mathbf{R}_{\ell,k}$, de taille $N{\times}N$, est la matrice de couplage entre modes, relative à la section $k$ du tronçon $\ell$, et $\mathbf{T}_{\ell,k}$ est une matrice diagonale, également de taille $N{\times}N$, dont les éléments diagonaux donnent les déphasages respectifs des différents modes sur la section $k$ du tronçon $\ell$.

La matrice $\mathbf{R}_{\ell,k}$ est supposée être une matrice aléatoire orthogonale ($\mathbf{R}_{\ell,k}.\mathbf{R}_{\ell,k}^{T}=\mathbf{I}_{M}$ où $\mathbf{I}_M$ est la matrice identité), ce qui traduit la conservation de l'énergie répartie sur les différents modes. Les coefficients non diagonaux de la matrice de couplage sont les coefficients de couplage entre modes. Leurs valeurs dépendent des intégrales de recouvrement des distributions de champ entre les différents modes se propageant dans la section du tronçon en question. Les intégrales de recouvrement dépendent elles-mêmes des imperfections et de la courbure du tronçon de fibre dans cette section.

La matrice $\mathbf{T}_{\ell,k}$ est, quant à elle, une matrice dont les coefficients diagonaux sont de la forme $e^{j\theta_{\ell,k}^{n}}$ où $\theta_{\ell,k}^{n}$ est le résultat du tirage d'une variable aléatoire uniformément répartie sur $[0,2\pi]$.

Les signaux reçus peuvent être décodés à l'aide d'un décodeur à maximum de vraisemblance, encore dit décodeur ML (*Maximum Likelihood*), de manière connue en soi et rappelée ci-après :
Le décodeur à maximum de vraisemblance estime le mot de code $\hat{\mathbf{C}}_{ML}$ minimisant la distance euclidienne sur l'ensemble $\Omega$ des mots de code possibles :

$$\hat{\mathbf{C}}_{ML} = \underset{\mathbf{C}\in\Omega}{\arg\min}\|\mathbf{Y}-\mathbf{HC}\|^{2} \qquad (3)$$

Cette recherche du minimum suppose de connaître préalablement la matrice **H** représentative du canal de transmission. Celle-ci peut être déterminée par une estimation canal à partir de symboles pilotes.

Le décodeur ML par recherche exhaustive dans l'ensemble $\Omega$ est toutefois complexe. Plus précisément, sa complexité varie en fonction de $card(\Omega) = q^{NT}$ où $q$ est le cardinal de l'alphabet de modulation. Ainsi pour un code TAST 6x6 utilisant des symboles 4-QAM, le cardinal de l'ensemble des codes est $card(\Omega) = 4^{36}$.

Alternativement, on pourra utiliser un décodeur basé sur le critère ML mais ne requérant pas une recherche exhaustive, tel qu'un décodeur par sphère voire un décodeur par sphère à pile, dit encore *Sphere-Bound Stack Decoder* (ou *SB-Stack Decoder*), tel que décrit dans l'article de R. Ouertani et al. intitulé « The spherical bound stack decoder » publié dans IEEE Int'l Conf. on wireless and mobile computing, networking and communications (WiMob), Avignon, France, Octobre 2008 ou encore dans la demande FR-A-2930861 incorporée par référence.

Alternativement encore, on pourra utiliser un décodeur de type ZF-DFE (*Zero Forcing Decision Feedback Equalizer*), connu en soi. Ce décodeur est sensiblement plus simple que le décodeur ML mais donne cependant de très bons résultats. A cet effet, l'expression (1) peut être transformée en l'expression vectorisée suivante :

$$\mathbf{Y}' = \mathbf{H}'\mathbf{C}' + \mathbf{N}' = \mathbf{H}_{eq}\mathbf{S} + \mathbf{N}' \qquad (4)$$

où **Y'**,**N'** sont des vecteurs de taille $NT{\times}1$ obtenus par concaténation des vecteurs colonnes des matrices **Y** et **N**, respectivement. La matrice **H'** est une matrice bloc de taille $NT{\times}NT$ obtenu par réplication de la matrice **H**, $T$ fois selon la direction horizontale et $T$ fois selon la direction verticale. **C'** est un vecteur de taille $NT{\times}1$ obtenu par **C'** = $\Gamma$**S** où $\Gamma$ est la matrice génératrice du code, de taille $NT{\times}NT$ et **S** est le vecteur de taille $NT{\times}1$ des symboles de modulation. La matrice est définie par $\mathbf{H}_{eq} = \mathbf{H}'\Gamma$ et est appelée matrice équivalente du canal de transmission. La matrice équivalente $\mathbf{H}_{eq}$ peut être décomposée à l'aide d'une décomposition QR, soit $\mathbf{H}_{eq} = \mathbf{QR}$ où **Q** est une matrice unitaire et **R** est une matrice triangulaire supérieure. Le décodage ZF-DFE consiste à résoudre le système équivalent à (4) :

$$\tilde{\mathbf{Y}} = \mathbf{Q}^{H}\mathbf{Y}' = \mathbf{RS} + \mathbf{Q}^{H}\mathbf{N}' \qquad (5)$$

Le vecteur $\hat{\mathbf{S}}_{ZFDFE}$ est obtenu en résolvant le système $\tilde{\mathbf{Y}} = \mathbf{R}\hat{\mathbf{S}}_{ZFDFE}$ en commençant par la dernière composante et en prenant une décision dure sur le symbole correspondant. Le symbole obtenu par décision dure est ensuite injectée dans l'équation précédente pour obtenir la composante précédente. On procède ainsi de proche en proche pour obtenir une estimation des différents symboles transmis.

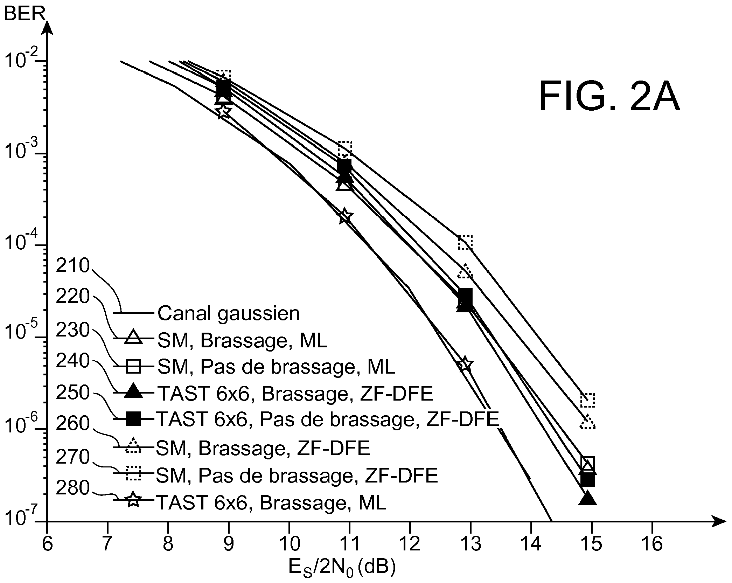

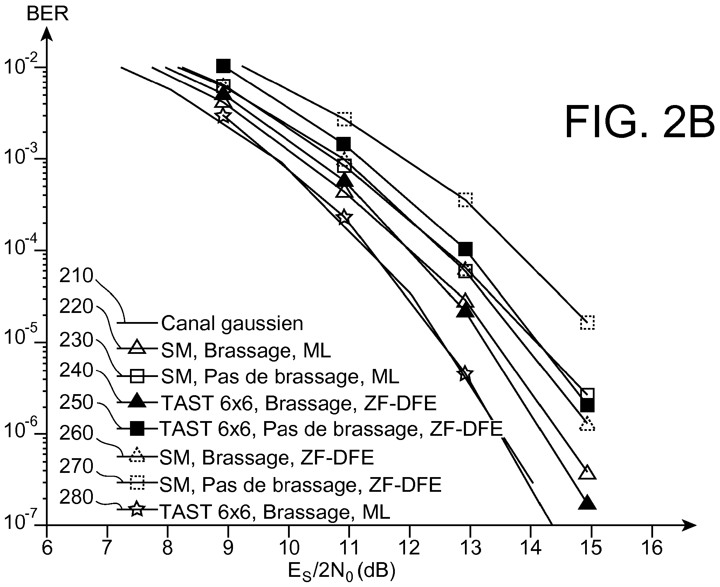

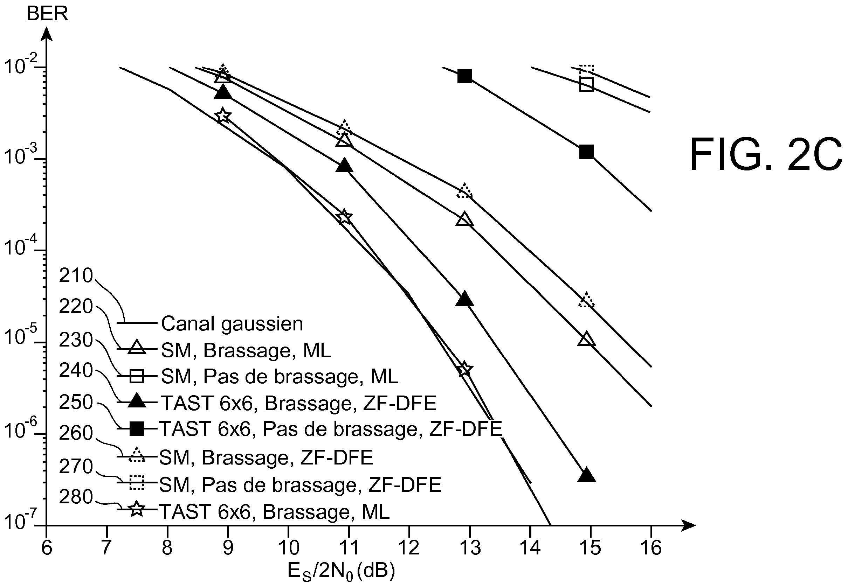

La Fig. 2A représente la variation du taux d'erreur binaire en fonction du rapport signal sur bruit pour un couplage élevé entre modes. La Fig. 2B représente la variation du taux d'erreur binaire en fonction du rapport signal sur bruit pour un couplage moyen entre modes. Enfin, la Fig. 2C représente la variation du taux d'erreur binaire en fonction du rapport signal sur bruit pour un faible couplage entre modes.

On a supposé que 6 modes se propageaient dans la fibre ($LP_{01}$, $LP_{11a}$, $LP_{11b}$, $LP_{02}$, $LP_{21a}$, $LP_{21b}$ où les indices a,b traduisent l'anisotropie selon deux axes orthogonaux). Le gain a été supposé égal à 1 pour le mode $LP_{01}$ et les offsets de gain $\Delta G_{01-uv}$ (par étage d'amplification) des modes $LP_{uv}$ ont été supposés égaux à $\Delta G_{01-11}$ =-1.3$dB$, $\Delta G_{01-02}$ = -0.2$dB$, et $\Delta G_{01-21}$ = -2$dB$.

Différents scenarii sont représentés sur les Figs. 2A-2C.

Le scenario 210 représente le cas du canal additif gaussien classique. Le scenario 220 représente le cas d'une transmission en absence de codage spatio-temporel mais avec brassage de modes et décodage ML en réception. Le scenario 230 représente le cas d'une transmission en absence de codage spatio-temporel et brassage de modes, mais avec décodage ML en réception. Le scenario 240 représente une transmission avec codage spatio-temporel au moyen d'un code TAST 6x6, avec brassage de modes et décodage ZF-DFE en réception. Le scenario 250 représente une transmission avec codage spatio-temporel au moyen d'un code TAST 6x6, sans brassage de modes et avec un décodage ZF-DFE en réception. Le scenario 260 correspond au cas d'une transmission en absence de codage spatio-temporel mais avec brassage de modes et décodage ZF-DFE en réception. Le scenario 270 correspond au cas d'une transmission sans codage spatio-temporel ni brassage de modes mais avec décodage ZF-DFE en réception. Enfin, le scenario 280 correspond au cas d'une transmission avec codage spatio-temporel au moyen d'un code TAST 6x6, brassage de modes et décodage ML en réception.

On remarque que, quel que soit le niveau de couplage, le meilleur résultat est obtenu lorsque l'on combine un codage spatio-temporel (en l'occurrence un code TAST 6x6), brassage de modes et décodage ML (courbes 280 dans les Figs. 2A-2C). La combinaison de codage spatio-temporel, brassage de modes et décodage ZF-DFE conduit également à une réduction sensible du taux d'erreurs binaires par rapport au même scenario sans brassage, lorsque le niveau de couplage dans la fibre est moyen ou faible.

Le mode de réalisation représenté en Fig. 1 associe à chaque amplificateur un brasseur de modes. On comprendra cependant qu'un brasseur de modes pourra n'être associé qu'à certains amplificateurs, par exemple qu'à un amplificateur sur $Q$ amplificateurs successifs, ou de manière plus générale $P$ ($P \geq 1$) brasseurs de modes pourront être prévus pour $Q$ amplificateurs successifs, soit un ratio d'équipement de $r = P/Q$. Ce ratio sera choisi d'autant plus faible que le couplage entre modes sera plus élevé et que la distribution de l'offset de gain (des amplificateurs) sera plus étroite. En effet, tant le couplage entre modes dans la fibre que le brassage de modes contribuent à la réduction de la dispersion modale de gain dans la fibre optique. Dans une fibre optique sans couplage ni brassage, la dispersion modale de gain varie en $\Delta G.L$ où $\Delta G$ est l'offset maximal de gain des amplificateurs pour les différents modes et $L$ est le nombre de tronçons de la fibre. *A contrario,* dans la situation théorique où le couplage serait maximal, c'est-à-dire dans le cas où la matrice de couplage d'un tronçon serait une matrice orthogonale aléatoire, on peut montrer que la dispersion modale de gain atteint un minimum sensiblement égal à $\Delta G.\sqrt{L}$. L'introduction de brasseurs avec un taux r permet de se rapprocher de la dispersion modale de gain minimale.

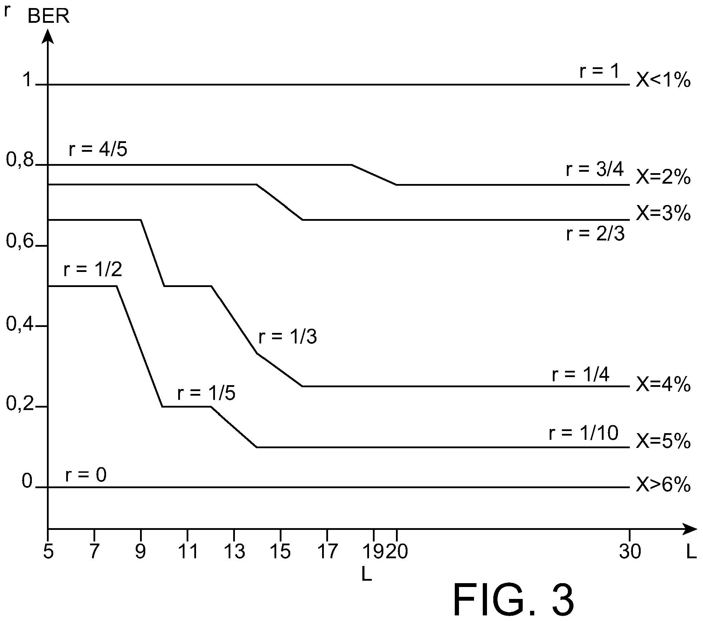

La Fig. 3 donne le taux d'équipement en brasseurs des amplificateurs pour obtenir une dispersion modale de gain minimale. On a représenté en ordonnées le taux $r$ d'équipement en brasseurs des amplificateurs et en abscisses le nombre $L$ de tronçons.

Chaque tronçon est supposé être constitué de $K$ = 400 sections avec des taux de couplage par tronçon équivalents à ceux engendrés par des désalignements maximaux de cœurs entre sections consécutives égaux à une fraction $x\%$ du rayon de cœur. Ces désalignements représentent des imperfections de la fibre et génèrent un couplage entre modes. L'offset maximum de gain par étage d'amplification était ici de $\Delta G$ = 2$dB$.

On remarque sur la figure qu'au-delà d'un certain nombre de tronçons, le taux d'équipement pour obtenir la dispersion modale de gain minimal tend vers un taux minimum. Ainsi, par exemple, pour un désalignement de cœur de 4%, on peut obtenir la dispersion modale minimale de gain en équipant d'un brasseur un amplificateur sur 4, dès lors que la fibre comprend plus de 16 tronçons.

De manière générale, à partir de l'offset maximal de gain et du taux de couplage entre modes, on peut déterminer le taux optimal d'équipement des amplificateurs. Ce taux est optimal dans le sens où, d'une part, il permet d'atteindre la dispersion modale de gain minimale et où, d'autre part, l'ajout de brasseurs supplémentaires ne conduirait pas à une amélioration des performances en termes de taux d'erreur binaire.

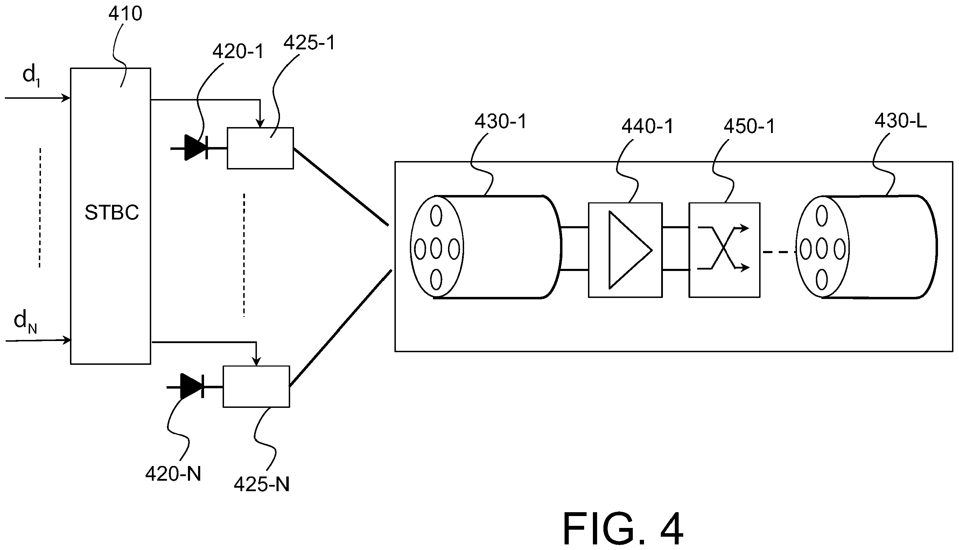

La Fig. 4 représente schématiquement un système de transmission sur fibre optique selon un second mode de réalisation de l'invention.

A la différence du premier mode de réalisation, la fibre utilisée est ici de type multi-cœur.

Le système de transmission optique comprend un codeur spatio-temporel 410, identique au codeur spatio-temporel 110, $N$ lasers $420_n$, $n = 1,...,N$, de même longueur d'onde ou bien alternativement un seul laser dont le faisceau est divisé en $N$ faisceaux distincts. Les faisceaux sont respectivement modulés par les différentes sorties du codeur spatio-temporel au moyen des modulateurs $425_n$, $n = 1,...,N$. Les faisceaux optiques ainsi modulés sont respectivement injectés dans les différents cœurs de la fibre. Cette injection peut être réalisée soit au moyen d'un dispositif optique en espace libre, soit au moyen d'un multiplexeur en optique guidée.

La fibre multi-cœur 430 comprend une pluralité $L$ de tronçons, $430\ell$, $\ell = 1,..., L$, un amplificateur $440_k$ étant prévu entre chaque paire de tronçons consécutifs $430\ell$ et $430\ell+1$. Chaque amplificateur $440\ell$ est associé à un brasseur de cœurs, $450\ell$, situé en amont ou en aval de l'amplificateur.

Les différentes variantes décrites en relation avec le premier mode de réalisation trouvent également ici à s'appliquer. En particulier, l'amplificateur peut être un amplificateur optique ou comprendre des photodiodes et des amplificateurs suivis de diodes lasers. De même les brasseurs de cœurs peuvent être implémentés de manière optique ou numérique (et plus généralement électrique). L'homme du métier comprendra que les différents types de décodage évoqués pour le premier mode de réalisation s'appliquent de la même façon au second mode de réalisation.

**Revendications**

1. Système de transmission optique sur fibre multi-mode comprenant :

    - un codeur (110), dit codeur spatio-temporel, transformant chaque bloc de symboles à transmettre en une matrice de code, chaque élément de ladite matrice étant relatif à un temps d'utilisation et à un mode de propagation de ladite fibre;
    - une pluralité de modulateurs ($125_n$) respectivement associés à des modes de propagation distincts de ladite fibre, chaque modulateur modulant un faisceau laser pendant un temps d'utilisation au moyen d'un élément correspondant de la matrice, chaque faisceau laser ainsi modulé étant injecté dans ladite fibre pour s'y propager selon un mode distinct;

    ledit système de transmission étant **caractérisé en ce que** :

    - ladite fibre comprend une pluralité de tronçons ($130\ell$), un amplificateur ($140\ell$) étant prévu entre deux tronçons consécutifs quelconques pour amplifier l'intensité des faisceaux se propageant selon lesdits modes ;
    - un brasseur de modes ($150\ell$) est associé au dit amplificateur pour effectuer une permutation desdits modes entre au moins deux tronçons consécutifs.

    ledit système de transmission comprenant $P$ brasseurs de modes prévus tous les $Q$ amplificateurs, le rapport $P/Q$ étant choisi de sorte que la dispersion modale de gain de la fibre soit sensiblement égale à la valeur

    $$\Delta G.\sqrt{L}$$ où $L$ désigne le nombre de tronçons de la fibre optique et $\Delta G$ désigne l'offset maximum de gain desdits $Q$ amplificateurs.

2. Système de transmission optique sur fibre multi-cœur comprenant :

    - un codeur (410), dit codeur spatio-temporel, transformant chaque bloc de symboles à transmettre en une matrice de code, chaque élément de ladite matrice étant relatif à un temps d'utilisation et à un cœur de ladite fibre ;
    - une pluralité de modulateurs ($425_n$) respectivement associés à des cœurs de ladite fibre, chaque modulateur modulant un faisceau laser pendant un temps d'utilisation au moyen d'un élément correspondant de la matrice, chaque faisceau laser ainsi modulé étant injecté dans un cœur distinct de ladite fibre;

    ledit système de transmission étant **caractérisé en ce que** :

    - ladite fibre comprend une pluralité de tronçons ($430\ell$), un amplificateur ($440\ell$) étant prévu entre deux tronçons consécutifs quelconques pour amplifier l'intensité des faisceaux se propageant dans ladite pluralité de cœurs;
    - un brasseur de cœurs ($450\ell$) est associé au dit amplificateur pour effectuer une permutation des faisceaux des différents cœurs entre au moins deux tronçons consécutifs ;
ledit système de transmission comprenant *P* brasseurs de cœurs prévus tous les *Q* amplificateurs, le rapport *P/Q* étant choisi de sorte que la dispersion modale de gain de la fibre soit sensiblement égale à la valeur $\Delta G.\sqrt{L}$ où *L* désigne le nombre de tronçons de la fibre optique et $\Delta G$ désigne l'offset maximum de gain desdits *Q* amplificateurs.

3. Système de transmission optique selon la revendication 1 ou 2, **caractérisé en ce que** le codeur spatio-temporel utilise un code TAST.

4. Système de transmission optique selon la revendication 1 ou 2, **caractérisé en ce que** le codeur spatio-temporel utilise un code parfait.

5. Système de transmission optique selon l'une des revendications précédentes, **caractérisé en ce que** chaque modulateur est un modulateur QAM, suivi d'un modulateur OFDM.

6. Système de transmission optique selon l'une des revendications précédentes, **caractérisé en ce que** les amplificateurs sont des amplificateurs optiques.

7. Système de transmission optique selon l'une des revendications 1 à 5, **caractérisé en ce que** les amplificateurs comprennent chacun une pluralité de photodiodes pour convertir les signaux optiques des différents modes en signaux électriques, des amplificateurs élémentaires amplifiant les différents signaux électriques, et une pluralité de diodes laser respectivement modulées par les signaux électriques ainsi amplifiés.

8. Méthode de transmission optique sur fibre multi-mode comprenant :

- un codage, dit codage spatio-temporel, transformant chaque bloc de symboles à transmettre en une matrice de code, chaque élément de ladite matrice étant relatif à un temps d'utilisation et à un mode de propagation de ladite fibre;
- une modulation d'une pluralité de faisceaux laser associés aux différents modes, chaque faisceau laser étant modulé pendant un temps d'utilisation au moyen d'un élément de la matrice correspondant, chaque faisceau laser ainsi modulé étant injecté dans ladite fibre pour s'y propager selon un mode distinct;

ladite méthode de transmission étant **caractérisée en ce que** :

- l'intensité des faisceaux se propageant selon lesdits modes est amplifiée entre deux tronçons consécutifs quelconques de ladite fibre en utilisant des amplificateurs, un amplificateur étant prévu entre deux tronçons consécutifs quelconques pour amplifier l'intensité des faisceaux se propageant selon lesdits modes ;
- les modes sont brassés entre au moins deux tronçons consécutifs en utilisant des brasseurs de modes, un brasseur de modes étant associé à un amplificateur pour effectuer une permutation des faisceaux des différents modes entre au moins deux tronçons consécutifs, les P brasseurs de modes étant agencés tous les Q amplificateurs, le rapport *P/Q* étant choisi de sorte que la dispersion modale de gain de la fibre soit sensiblement égale à la valeur $\Delta G.\sqrt{L}$ où *L* désigne le nombre de tronçons de la fibre optique et $\Delta G$ désigne l'offset maximum de gain desdits *Q* amplificateurs.

9. Méthode de transmission optique sur fibre multi-cœur comprenant :

- un codage, dit codage spatio-temporel, transformant chaque bloc de symboles à transmettre en une matrice de code, chaque élément de ladite matrice étant relatif à un temps d'utilisation et à un cœur de ladite fibre;
- une modulation d'une pluralité de faisceaux laser associés aux différents cœurs, chaque faisceau laser étant modulé pendant un temps d'utilisation au moyen d'un élément de la matrice correspondant, chaque faisceau laser ainsi modulé étant injecté dans un cœur distinct de ladite fibre;

ladite méthode de transmission étant **caractérisée en ce que** :

- l'intensité des faisceaux se propageant selon lesdits cœurs est amplifiée entre deux tronçons consécutifs quelconques de ladite fibre en utilisant des amplificateurs, un amplificateur étant prévu entre deux tronçons consécutifs quelconques pour amplifier l'intensité des faisceaux se propageant dans ladite pluralité de cœurs;
- les faisceaux des différents cœurs sont brassés entre au moins deux tronçons consécutifs en utilisant des brasseurs de cœurs, *P* brasseurs de cœurs étant agencés tous les *Q* amplificateurs, le rapport *P/Q* étant choisi de sorte que la dispersion modale de gain de la fibre soit sensiblement égale à la valeur $\Delta G.\sqrt{L}$ où *L* désigne le nombre de tronçons de la fibre optique et $\Delta G$ désigne l'offset maximum de gain desdits *Q* amplificateurs.

**10.** Méthode de transmission optique selon la revendication 8 ou 9, **caractérisée en ce que** le codage spatio-temporel utilise un code TAST.

**11.** Méthode de transmission optique selon la revendication 8 ou 9, **caractérisée en ce que** le codage spatio-temporel utilise un code parfait.

**12.** Méthode de transmission optique selon l'une des revendications 8 à 11, **caractérisée en ce que** la modulation comprend une première étape de modulation QAM suivie d'une seconde étape de modulation OFDM.

**13.** Méthode de transmission optique selon l'une des revendications 8 à 12, **caractérisée en ce que** l'amplification entre deux tronçons consécutifs est réalisée au moyen d'un pompage optique.

**14.** Méthode de transmission optique selon l'une des revendications 8 à 12, **caractérisée en ce que** l'amplification entre deux tronçons consécutifs est réalisée au moyen d'une conversion optique-électrique, une amplification des signaux électriques ainsi obtenus et une conversion électrique-optique des signaux électriques ainsi amplifiés.

**Patentansprüche**

**1.** Optisches Übertragungssystem über eine Multimode-Faser, Folgendes umfassend:

- einen Codierer (110), genannt räumlich-zeitlichen Codierer, welcher jeden zu übertragenden Symbolblock in eine Codematrix umwandelt, wobei jedes Element der Matrix sich auf eine Nutzungszeit und einen Fortpflanzungsmodus der Faser bezieht;
- eine Vielzahl von Modulatoren ($125_n$), welche jeweils unterschiedlichen Fortpflanzungsmodi der Faser zugeordnet sind, wobei jeder Modulator einen Laserstrahl über eine Nutzungszeit mithilfe eines entsprechenden Elements der Matrix moduliert, wobei jeder so modulierte Laserstrahl in die Faser eingespeist wird, um sich dadurch einem unterschiedlichen Modus gemäß fortzupflanzen;

wobei das Übertragungssystem **dadurch gekennzeichnet ist, dass**:

- die Faser eine Vielzahl von Abschnitten (130 *l*) umfasst, wobei ein Verstärker (140 *l*) zwischen zwei beliebigen aufeinanderfolgenden Abschnitten vorgesehen ist, um die Intensität der sich gemäß den Modi fortpflanzenden Strahlen zu verstärken;
- ein Modenmischer (150 *l*) dem Verstärker zugeordnet ist, um eine Permutation der Modi zwischen mindestens zwei aufeinanderfolgenden Abschnitten durchzuführen.
wobei das Übertragungssystem *P* Modenmischer umfasst, welche alle *Q* Verstärker vorgesehen sind, wobei das Verhältnis *P/Q* so gewählt ist, dass die Verstärkungsmodendispersion der Faser im Wesentlichen gleich dem Wert $\Delta G.\sqrt{L}$ ist, wobei *L* die Anzahl der Abschnitte des Lichtwellenleiters bezeichnet und $\Delta G$ den maximalen Verstärkungs-Offset der Q Verstärker bezeichnet.

**2.** Optisches Übertragungssystem über eine Multicore-Faser, Folgendes umfassend:

- einen Codierer (410), genannt räumlich-zeitlichen Codierer, welcher jeden zu übertragenden Symbolblock in eine Codematrix umwandelt, wobei jedes Element der Matrix sich auf eine Nutzungszeit und einen Kern der Faser bezieht;
- eine Vielzahl von Modulatoren ($425_n$), welche jeweils Kernen der Faser zugeordnet sind, wobei jeder Modulator einen Laserstrahl über eine Nutzungszeit mithilfe eines entsprechenden Elements der Matrix moduliert, wobei jeder so modulierte Laserstrahl in einen unterschiedlichen Kern der Faser eingespeist wird;

wobei das Übertragungssystem **dadurch gekennzeichnet ist, dass**:

- die Faser eine Vielzahl von Abschnitten (430 *l*) umfasst, wobei ein Verstärker (440 *l*) zwischen zwei beliebigen aufeinanderfolgenden Abschnitten vorgesehen ist, um die Intensität der sich in der Vielzahl von Kernen fortpflanzenden Strahlen zu verstärken;
- ein Kernmischer (450 *l*) dem Verstärker zugeordnet ist, um eine Permutation der Strahlen der unterschiedlichen Kerne zwischen mindestens zwei aufeinanderfolgenden Abschnitten durchzuführen;
wobei das Übertragungssystem *P* Kernmischer umfasst, welche alle *Q* Verstärker vorgesehen sind, wobei das Verhältnis *P/Q* so gewählt ist, dass die Verstärkungsmodendispersion der Faser im Wesentlichen gleich dem Wert $\Delta G.\sqrt{L}$ ist, wobei *L* die Anzahl der Abschnitte des Lichtwellenleiters bezeichnet und $\Delta G$ den maximalen Verstärkungs-Offset der *Q* Verstärker bezeichnet.

3. Optisches Übertragungssystem nach Anspruch 1 oder 2, **dadurch gekennzeichnet, dass** der räumlich-zeitliche Codierer einen TAST-Code verwendet.

4. Optisches Übertragungssystem nach Anspruch 1 oder 2, **dadurch gekennzeichnet, dass** der räumlich-zeitliche Codierer einen perfekten Code verwendet.

5. Optisches Übertragungssystem nach einem der vorhergehenden Ansprüche, **dadurch gekennzeichnet, dass** jeder Modulator ein QAM-Modulator ist, gefolgt von einem OFDM-Modulator.

6. Optisches Übertragungssystem nach einem der vorhergehenden Ansprüche, **dadurch gekennzeichnet, dass** die Verstärker optische Verstärker sind.

7. Optisches Übertragungssystem nach einem der Ansprüche 1 bsi 5, **dadurch gekennzeichnet, dass** die Verstärker jeweils eine Vielzahl von Photodioden umfassen, um die optischen Signale der unterschiedlichen Modi in elektrische Signale umzuwandeln, wobei Elementarverstärker die unterschiedlichen elektrischen Signale verstärken, und eine Vielzahl von Laserdioden, welche jeweils durch die so verstärkten elektrischen Signale moduliert werden.

8. Optisches Übertragungsverfahren über eine Multimode-Faser, Folgendes umfassend:

- eine Codierung, genannt räumlich-zeitliche Codierung, welche jeden zu übertragenden Symbolblock in eine Codematrix umwandelt, wobei jedes Element der Matrix sich auf eine Nutzungszeit und einen Fortpflanzungsmodus der Faser bezieht;
- eine Modulation einer Vielzahl von Laserstrahlen, welche den unterschiedlichen Modi zugeordnet sind, wobei jeder Laserstrahl über eine Nutzungszeit mithilfe eines entsprechenden Elements der Matrix moduliert wird, wobei jeder so modulierte Laserstrahl in die Faser eingespeist wird, um sich dadurch einem unterschiedlichen Modus gemäß fortzupflanzen;

wobei das Übertragungsverfahren **dadurch gekennzeichnet ist, dass**:

- die Intensität der Strahlen, welche sich entsprechend den Modi fortpflanzen, zwischen zwei beliebigen aufeinanderfolgenden Abschnitten der Faser unter Verwendung der Verstärker verstärkt wird, wobei ein Verstärker zwischen zwei beliebigen aufeinanderfolgenden Abschnitten vorgesehen ist, um die Intensität der sich gemäß den Modi fortpflanzenden Strahlen zu verstärken;
- die Modi zwischen mindestens zwei aufeinanderfolgenden Abschnitten unter Verwendung der Modenmischer gemischt werden, wobei ein Modenmischer einem Verstärker zugeordnet ist, um eine Permutation der Strahlen der unterschiedlichen Modi zwischen mindestens zwei aufeinanderfolgenden Abschnitten zu bewerkstelligen, wobei die *P* Modenmischer alle *Q* Verstärker angeordnet sind, wobei das Verhältnis *P/Q* so gewählt ist, dass die Verstärkungsmodendispersion der Faser im Wesentlichen gleich dem Wert $\Delta G.\sqrt{L}$ ist, wobei *L* die Anzahl der Abschnitte des Lichtwellenleiters bezeichnet und $\Delta G$ den maximalen Verstärkungs-Offset der *Q* Verstärker bezeichnet.

9. Optisches Übertragungsverfahren über eine Multicore-Faser, Folgendes umfassend:

- eine Codierung, genannt räumlich-zeitliche Codierung, welche jeden zu übertragenden Symbolblock in eine Codematrix umwandelt, wobei jedes Element der Matrix sich auf eine Nutzungszeit und einen Kern der Faser bezieht;

- eine Modulation einer Vielzahl von Laserstrahlen, welche den unterschiedlichen Kernen zugeordnet sind, wobei jeder Laserstrahl über eine Nutzungszeit mithilfe eines entsprechenden Elements der Matrix moduliert wird, wobei jeder so modulierte Laserstrahl in einen unterschiedlichen Kern der Faser eingespeist wird;

wobei das Übertragungsverfahren **dadurch gekennzeichnet ist, dass**:

- die Intensität der Strahlen, welche sich entsprechend den Kernen fortpflanzen, zwischen zwei beliebigen aufeinanderfolgenden Abschnitten der Faser unter Verwendung der Verstärker verstärkt wird, wobei ein Verstärker zwischen zwei beliebigen aufeinanderfolgenden Abschnitten vorgesehen ist, um die Intensität der sich in der Vielzahl der Kerne fortpflanzenden Strahlen zu verstärken;
- die Strahlen der unterschiedlichen Kerne zwischen mindestens zwei aufeinanderfolgenden Abschnitten unter Verwendung der Kernmischer gemischt werden, wobei $P$ Kernmischer alle $Q$ Verstärker angeordnet sind, wobei das Verhältnis $P/Q$ so gewählt ist, dass die Verstärkungsmodendispersion der Faser im Wesentlichen gleich dem Wert $\Delta G.\sqrt{L}$ ist, wobei $L$ die Anzahl der Abschnitte des Lichtwellenleiters bezeichnet und $\Delta G$ den maximalen Verstärkungs-Offset der $Q$ Verstärker bezeichnet.

10. Optisches Übertragungsverfahren nach Anspruch 8 oder 9, **dadurch gekennzeichnet, dass** die räumlich-zeitliche Codierung einen TAST-Code verwendet.

11. Optisches Übertragungsverfahren nach Anspruch 8 oder 9, **dadurch gekennzeichnet, dass** die räumlich-zeitliche Codierung einen perfekten Code verwendet.

12. Optisches Übertragungsverfahren nach einem der Ansprüche 8 bis 11, **dadurch gekennzeichnet, dass** die Modulation einen ersten QAM-Modulationsschritt umfasst, gefolgt von einem zweiten OFDM-Modulationsschritt.

13. Optisches Übertragungsverfahren nach einem der Ansprüche 8 bis 12, **dadurch gekennzeichnet, dass** die Verstärkung zwischen zwei aufeinanderfolgenden Abschnitten mithilfe eines optischen Pumpvorgangs verwirklicht wird.

14. Optisches Übertragungsverfahren nach einem der Ansprüche 8 bis 12, **dadurch gekennzeichnet, dass** die Verstärkung zwischen zwei aufeinanderfolgenden Abschnitten mithilfe einer optisch-elektrischen Umwandlung, einer Verstärkung der so erzielten elektrischen Signale und einer elektrisch-optischen Umwandlung der so verstärkten elektrischen Signale verwirklicht wird.

**Claims**

1. A system for optical transmission over a multimode fiber, comprising:

- an encoder (110), referred to as a space/time encoder, transforming each block of symbols to be transmitted into a code matrix, each element of the matrix relating to a time of use and a propagation mode of the fiber;
- a plurality of modulators ($125_n$), respectively associated with different propagation modes of the fiber, each modulator modulating a laser beam during a time of use using a corresponding element of the matrix, each laser beam thus modulated being injected into the fiber in order to propagate therethrough in accordance with a different mode;

the transmission system being **characterised in that**:

- the fiber comprises a plurality of slices (130 $\ell$), an amplifier (140 $\ell$) being provided between any two consecutive slices in order to amplify the intensity of the beams being propagated in accordance with the modes;
- a mode scrambler (150 $\ell$) is associated with the amplifier in order to carry out a permutation of the modes between at least two consecutive slices, the transmission system comprising $P$ mode scramblers which are provided every $Q$ amplifiers, the ratio $P/Q$ being selected so that the gain mode dispersion of the fiber is substantially equal to the value $\Delta G.\sqrt{L}$, where $L$ refers to the number of slices of the optical fiber and $\Delta G$ refers to the maximum gain offset of the $Q$ amplifiers.

2. A system for optical transmission over a multicore fiber, comprising:

- an encoder (410), referred to as a space/time encoder, transforming each block of symbols to be transmitted into a code matrix, each element of the matrix relating to a time of use and a core of the fiber;
- a plurality of modulators ($425_n$) associated respectively with cores of the fiber, each modulator modulating a laser beam for a time of use using a corresponding element of the matrix, each laser beam thus modulated being injected into a different core of the fiber;

the transmission system being **characterised in that**:

- the fiber comprises a plurality of slices ($430\,\ell$), an amplifier ($440\,\ell$) being provided between any two consecutive slices in order to amplify the intensity of the beams being propagated in the plurality of cores;
- a core scrambler ($450\,\ell$) is associated with the amplifier in order to carry out a permutation of the beams of the different cores between at least two consecutive slices;
the transmission system comprising $P$ core scramblers which are provided every $Q$ amplifiers, the ratio $P/Q$ being selected so that the gain mode dispersion of the fiber is substantially equal to the value $\Delta G.\sqrt{L}$, where $L$ refers to the number of slices of the optical fiber and $\Delta G$ refers to the maximum gain offset of the $Q$ amplifiers.

3. Optical transmission system according to claim 1 or 2, **characterised in that** the space/time encoder uses a TAST code.

4. Optical transmission system according to claim 1 or 2, **characterised in that** the space/time encoder uses a perfect code.

5. Optical transmission system according to any one of the preceding claims, **characterised in that** each modulator is a QAM modulator, followed by an OFDM modulator.

6. Optical transmission system according to any one of the preceding claims, **characterised in that** the amplifiers are optical amplifiers.

7. Optical transmission system according to any one of claims 1 to 5, **characterised in that** the amplifiers each comprise a plurality of photodiodes for converting the optical signals of the different modes into electrical signals, elementary amplifiers amplifying the different electrical signals, and a plurality of laser diodes respectively modulated by the electrical signals thus amplified.

8. A method for optical transmission over a multimode fiber comprising:

- an encoding, referred to as space/time encoding, transforming each block of symbols to be transmitted into a code matrix, each element of the matrix relating to a time of use and a propagation mode of the fiber;
- a modulation of a plurality of laser beams associated with the different modes, each laser beam being modulated for a time of use using an element of the corresponding matrix, each laser beam thus modulated being injected into the fiber in order to be propagated therethrough in accordance with a different mode;

the transmission method being **characterised in that**:

- the intensity of the beams being propagated in accordance with the modes is amplified between any two consecutive slices of the fiber using amplifiers, an amplifier being provided between any two consecutive slices in order to amplify the intensity of the beams which are propagated in accordance with the modes;
- the modes are scrambled between at least two consecutive slices using mode scramblers, a mode scrambler being associated with an amplifier in order to carry out a permutation of the beams of the different modes between at least two consecutive slices, the $P$ mode scramblers being arranged every $Q$ amplifiers, the ratio $P/Q$ being selected so that the gain mode dispersion of the fiber is substantially equal to the value $\Delta G.\sqrt{L}$, where $L$ refers to the number of slices of the optical fiber and $\Delta G$ refers to the maximum gain offset of the $Q$ amplifiers.

9. Multi-core optical fiber transmission method, comprising:

- an encoding which is referred to as a space/time encoding and which converts each block of symbols to be transmitted into a code matrix, each element of the matrix relating to a time of use and a core of the fiber;
- a modulation of a plurality of laser beams associated with the different cores, each laser beam being modulated for a time of use using an element of the corresponding matrix, each laser beam thus modulated being injected into a different core of the fiber;

the transmission method being **characterised in that**:

- the intensity of the beams being propagated in accordance with the cores is amplified between any two consecutive slices of the fiber using amplifiers, an amplifier being provided between any two consecutive slices in order to amplify the intensity of the beams which are propagated in the plurality of cores;
- the beams of the different cores are scrambled between at least two consecutive slices using core scramblers, $P$ core scramblers being arranged every $Q$ amplifiers, the ratio $P/Q$ being selected so that the gain mode dispersion of the fiber is substantially equal to the value $\Delta G.\sqrt{L}$, where $L$ refers to the number of slices of the optical fiber and $\Delta G$ refers to the maximum gain offset of the $Q$ amplifiers.

10. Optical transmission method according to claim 8 or 9, **characterised in that** the space/time encoding uses a TAST code.

11. Optical transmission method according to claim 8 or 9, **characterised in that** the space/time encoding uses a perfect code.

12. Optical transmission method according to any one of claims 8 to 11, **characterised in that** the modulation comprises a first modulation step QAM followed by a second modulation step OFDM.

13. Optical transmission method according to any one of claims 8 to 12, **characterised in that** the amplification between two consecutive slices is carried out using optical pumping.

14. Optical transmission method according to any one of claims 8 to 12, **characterised in that** the amplification between two consecutive slices is carried out using an optical/electric conversion, an amplification of the electrical signals thus obtained and an electrical/optical conversion of the electrical signals thus amplified.

FIG. 1

FIG. 2A

BER

$E_S/2N_0$ (dB)

210 — Canal gaussien
220 — SM, Brassage, ML
230 — SM, Pas de brassage, ML
240 — TAST 6x6, Brassage, ZF-DFE
250 — TAST 6x6, Brassage, ZF-DFE
260 — TAST 6x6, Pas de brassage, ZF-DFE
270 — SM, Brassage, ZF-DFE
280 — SM, Pas de brassage, ZF-DFE
— TAST 6x6, Brassage, ML

EP 3 164 951 B1

FIG. 2B

BER

$10^{-2}$

$10^{-3}$

$10^{-4}$

$10^{-5}$

$10^{-6}$

$10^{-7}$

210 ——— Canal gaussien

220 —△— SM, Brassage, ML

230 —☐— SM, Pas de brassage, ML

240 —▲— TAST 6x6, Brassage, ZF-DFE

250 —■— TAST 6x6, Pas de brassage, ZF-DFE

260 —△— SM, Brassage, ZF-DFE

270 —☐— SM, Pas de brassage, ZF-DFE

280 —☆— TAST 6x6, Brassage, ML

6   7   8   9   10   11   12   13   14   15   16

$E_S/2N_0$ (dB)

FIG. 2C

BER

$10^{-2}$

$10^{-3}$

$10^{-4}$

$10^{-5}$

$10^{-6}$

$10^{-7}$

210 ——— Canal gaussien
220 —△— SM, Brassage, ML
230 —□— SM, Pas de brassage, ML
240 —▲— TAST 6x6, Brassage, ZF-DFE
250 —■— TAST 6x6, Pas de brassage, ZF-DFE
260 —△— SM, Brassage, ZF-DFE
270 —□— SM, Pas de brassage, ZF-DFE
280 —☆— TAST 6x6, Brassage, ML

6    7    8    9    10    11    12    13    14    15    16

$E_S/2N_0$ (dB)

EP 3 164 951 B1

FIG. 3

FIG. 4

EP 3 164 951 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2977099 A

- FR 2930861 A

**Littérature non-brevet citée dans la description**

- **H. EL GAMAL et al.** Universal Space-Time Coding. *IEEE Trans. on Information Theory,* Mai 2003, vol. 49 (5
- **F. OGGIER et al.** Perfect space-time codes » publié dans Trans. *Information Theory,* Septembre 2006, vol. 52 (9
- **G. LE COQ et al.** Few-mode Er3+ doped fiber with micro-structured core for mode division multiplexing in the C-band. *Optics Express,* Décembre 2013, vol. 21 (25), 31646-31659

- **AN LI et al.** Transmission of 107-Gb/s mode and polarization multiplexed CO-OFDM signal over a two-mode fiber. *Optics Express,* 25 Avril 2011, vol. 19 (9), 8808-8814
- **R. OUERTANI et al.** The spherical bound stack decoder. *IEEE Int'l Conf. on wireless and mobile computing, networking and communications (WiMob),* Octobre 2008